**Europäisches Patentamt**

**European Patent Office**

**Office européen des brevets**

(19)

(11)  **EP 1 598 951 A1**

(12)  # DEMANDE DE BREVET EUROPEEN

(43)  Date de publication:
      **23.11.2005  Bulletin 2005/47**

(51)  Int Cl.$^7$: **H04B 5/00**

(21)  Numéro de dépôt: **05103446.0**

(22)  Date de dépôt: **27.04.2005**

(84)  Etats contractants désignés:
      **AT BE BG CH CY CZ DE DK EE ES FI FR GB GR HU IE IS IT LI LT LU MC NL PL PT RO SE SI SK TR**
      Etats d'extension désignés:
      **AL BA HR LV MK YU**

(30)  Priorité: **10.05.2004  FR 0404994**

(71)  Demandeur: **SCHNEIDER ELECTRIC INDUSTRIES SAS**
      **92500 Rueil-Malmaison (FR)**

(72)  Inventeurs:
      • **Chauvet, Francis**
        **16440, Moutiers (FR)**
      • **Guichard, Christophe**
        **16000 Angouleme (FR)**

(54)  **Système de détection inductif de sécurité**

(57)  Système de détection de présence comportant un détecteur de proximité inductif (10) et une cible (20) susceptible d'être détectée par le détecteur, le détecteur (10) comprenant un premier circuit oscillant (11) qui génère un signal de détection (18) selon plusieurs fréquences d'oscillation distinctes ($F_{OSC1}$, $F_{OSC2}$) et des moyens de traitement (40) dudit signal de détection (18). La cible (20) comporte un second circuit oscillant (21) résonnant à une fréquence (Fc) sensiblement égale à l'une des fréquences d'oscillation du premier circuit oscillant (11).

## FIG. 1

EP 1 598 951 A1

## Description

La présente invention se rapporte à un système de détection inductif capable de détecter la présence d'une cible placée à proximité d'un détecteur de proximité inductif. En particulier, le système de détection doit assurer une fonction de sécurité en étant capable de différencier une cible particulière par rapport à un objet usuel. Un tel système peut notamment être utilisé dans tout automatisme nécessitant une fonction de sécurité importante, par exemple dans un contrôle d'accès ou un contrôle de fermeture de porte machine.

Les détecteurs de proximité inductifs sont des capteurs sans contact bien connus qui permettent de détecter la présence d'une cible, comme un objet métallique, lorsque celle-ci est placée dans la zone de détection du détecteur. Ils fournissent soit un signal de sortie binaire indiquant la présence ou l'absence d'une cible, soit un signal de sortie analogique, en fonction de la distance de la cible par rapport au détecteur. Ces détecteurs ne sont néanmoins pas capables de différencier une cible particulière, ce qui les rend non adaptés pour certaines applications.

En effet, dans le cas d'une application où un système de détection est par exemple utilisé pour un contrôle de fermeture de porte, la cible est normalement liée à une partie mobile de la porte et le détecteur est placé sur un bâti fixe de la porte. Le système est paramétré pour que le signal de sortie du détecteur soit l'image de l'état fermé de la porte, quand la cible liée à la partie mobile de la porte est détectée par le détecteur fixé sur la partie fixe de la porte. Cependant avec un détecteur de proximité habituel, la cible peut être substituée par tout objet métallique quelconque de taille suffisante (comme un outil, une clef, une plaque, etc...) pour obtenir le même résultat. Ainsi, si l'on plaçait un tel objet métallique à proximité du détecteur, le système indiquerait que la porte est effectivement fermée sans connaître réellement la position de la partie mobile de la porte. La fonction de sécurité ne serait alors évidemment plus remplie, pouvant causer des manquements graves à la sécurité des biens et des personnes, incompatibles avec la norme EN954.

Le but de l'invention est d'éviter un tel inconvénient en proposant un système de détection inductif de sécurité qui soit capable de différencier une cible particulière par rapport à un objet usuel, tout en proposant une solution simple, fiable et économique.

Pour cela, l'invention décrit un système de détection de présence comportant un détecteur de proximité inductif et une cible susceptible d'être détectée par le détecteur. Le détecteur comprend un premier circuit oscillant qui génère un signal de détection selon plusieurs fréquences d'oscillation distinctes et des moyens de traitement dudit signal de détection. Selon une première caractéristique, la cible comporte un second circuit oscillant résonnant à une fréquence fixe sensiblement égale à l'une des fréquences d'oscillation du premier circuit oscillant.

Selon une autre caractéristique, le premier circuit oscillant commute entre deux fréquences d'oscillation en fonction d'un ordre de commutation binaire cyclique donné par les moyens de traitement. Le système de détection fournit un signal de sortie indiquant une présence d'une cible lorsque les variations du signal de détection sont synchronisées avec les variations de l'ordre de commutation.

Selon une autre caractéristique, l'intervalle de temps entre deux changements d'états consécutifs de l'ordre de commutation est variable.

D'autres caractéristiques et avantages vont apparaître dans la description détaillée qui suit en se référant à un mode de réalisation donné à titre d'exemple et représenté par les dessins annexés sur lesquels :

- la figure 1 représente un schéma simplifié d'un système de détection selon l'invention,
- la figure 2 détaille un premier mode de réalisation d'un premier circuit oscillant et d'un oscillateur,
- la figure 3 montre un deuxième mode de réalisation du premier circuit oscillant,
- la figure 4 donne des représentations graphiques d'un ordre de commutation et du signal de détection correspondant, dans différentes situations.

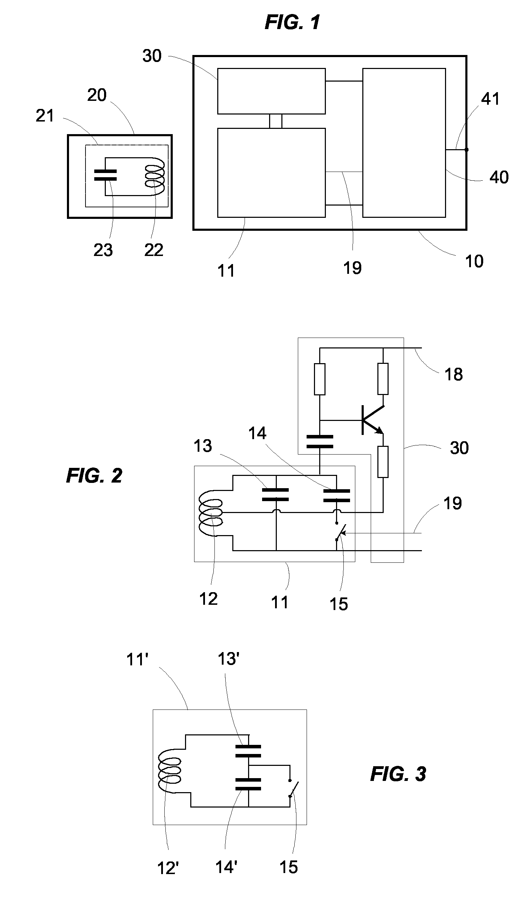

En référence à la figure 1, le système de détection comprend un détecteur de proximité inductif 10 et une cible 20 susceptible d'être détectée lorsqu'elle est située à proximité du détecteur, c'est-à-dire dans sa zone de détection. Le détecteur 10 comporte un circuit oscillant 11, appelé premier circuit oscillant, qui génère un signal de détection 18 et des moyens de traitement 40 qui fournissent un signal de sortie 41. Le signal de sortie est un signal binaire qui indique la présence ou l'absence d'une cible 20 à proximité du détecteur 10.

Le premier circuit oscillant 11 est alimenté par un oscillateur 30, par exemple un oscillateur analogique tel que celui représenté en figure 2 ou un oscillateur de type Namur. Cet oscillateur 30 est un générateur de courant qui envoie au premier circuit oscillant 11 un courant dont la fréquence doit s'accorder à la fréquence d'oscillation du premier circuit oscillant 11. L'oscillateur 30 ne doit pas être un oscillateur fonctionnant en oscillation forcée.

Les moyens de traitement 40 comportent un étage de détection chargé d'amplifier et de mettre en forme le signal de détection 18 reçu du premier circuit oscillant 11 et une unité de traitement pour analyser ce signal reçu et en déduire la réponse du détecteur. Les moyens de traitement 40 comprennent aussi un étage de sortie qui met en forme et délivre le signal de sortie 41 du système de détection, à partir de la réponse élaborée par l'unité de traitement.

Le premier circuit oscillant 11 est composé d'un bobinage 12 d'inductance L qui est connecté en parallèle avec un circuit capacitif variable. Le bobinage 12 est placé de manière à pouvoir être influencé par une cible placée à proximité du détecteur 10. Selon une première variante, le circuit capacitif variable comprend une première capacité 13 connectée en parallèle avec une seconde capacité 14, ainsi qu'un commutateur électronique 15 raccordé en série avec la seconde capacité 14.

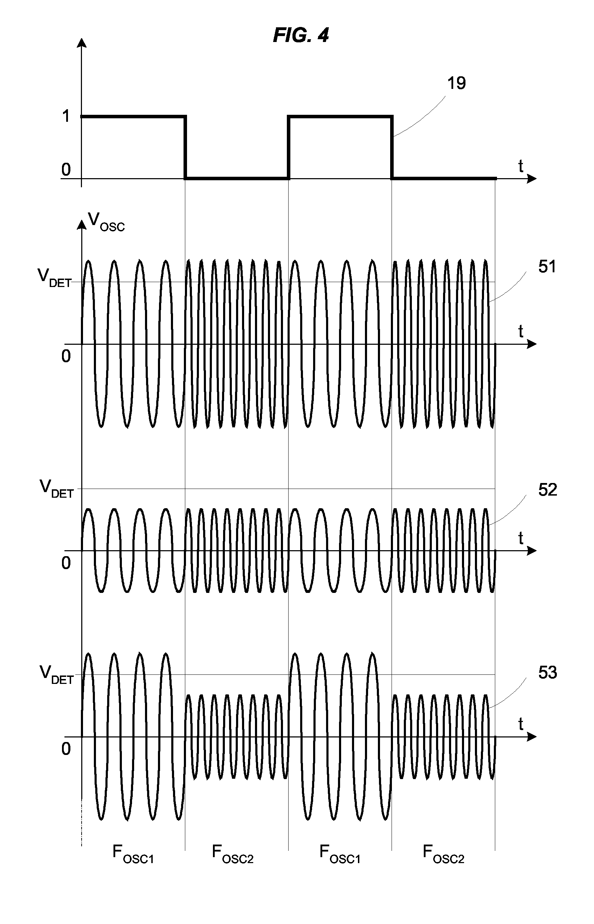

Selon une autre variante équivalente présentée en figure 3, le premier circuit oscillant 11' possède un circuit capacitif variable qui comprend une première capacité 13' connectée en série avec une seconde capacité 14', ainsi qu'un commutateur électronique 15 raccordé en parallèle avec la seconde capacité 14'. Le commutateur électronique 15, qui se trouve soit dans un état ouvert, soit dans un état fermé, est piloté par un ordre de commutation binaire 19 qui émane préférentiellement des moyens de traitement 40. Le commutateur 15 peut notamment inclure un transistor, par exemple de type MOS, un triac, un thyristor, un microsystème électromécanique (MEMS) bilame, ou autres.

Le premier circuit oscillant 11 fonctionne en oscillation libre, c'est-à-dire que ce sont la valeur de l'inductance L du bobinage 12 et la valeur de la capacité du circuit capacitif variable qui définissent la fréquence d'oscillation $F_{OSC}$ du détecteur 10. Il est donc possible de faire varier cette fréquence grâce au circuit capacitif variable. Dans les exemples des figures 2 et 3, suivant que le commutateur 15 se trouve à l'état fermé ou à l'état ouvert, il connecte ou isole la seconde capacité 14,14', ce qui modifie la valeur de la capacité du circuit capacitif variable entre une valeur $C_1$ et une valeur $C_2$. La fréquence d'oscillation $F_{OSC}$ du détecteur varie ainsi entre deux valeurs $F_{OSC1}$ et $F_{OSC2}$, suivant la formule connue :

$$F_{OSC1} = 1 / 2_\pi \sqrt{LC_1} \text{ et } F_{OSC2} = 1 / 2\pi \sqrt{LC_2}$$

Selon l'invention, la cible 20 comporte elle aussi un circuit oscillant 21, appelé second circuit oscillant, qui est composé d'un bobinage 22 d'inductance $L_C$ connecté en parallèle avec une capacité 23 de valeur $C_C$, ce qui donne une fréquence de résonance $F_C$ fixe égale à :

$$F_C = 1 / 2\pi \sqrt{L_C C_C}$$

Les valeurs $L_C$ et $C_C$ sont choisies pour que la fréquence $F_C$ soit sensiblement égale à l'une ou l'autre des deux fréquences d'oscillation $F_{OSC1}$ ou $F_{OSC2}$. Ainsi, lorsqu'une telle cible 20 est située à l'intérieur de la zone de détection du détecteur 10, le premier circuit oscillant 11 entre en résonance avec le second circuit oscillant 21 mais seulement pour l'une des deux fréquences d'oscillation $F_{OSC1}$ ou $F_{OSC2}$ : le signal de détection 18 peut donc être différent suivant la valeur de la fréquence d'oscillation $F_{OSC}$ puisque, en présence d'une cible 20, il n'est amorti que par une seule des deux fréquences $F_{OSC1}$ et $F_{OSC2}$.

Dans un mode de réalisation de l'invention, le bobinage 12 et les capacités 13 et 14 sont choisies fournir des valeurs d'environ 100KHz pour $F_{OSC1}$ et d'environ 140KHz pour $F_{OSC2}$. Dans cet exemple, une tolérance de l'ordre de 10% de la valeur $F_C$ peut parfaitement être tolérée pour parvenir à un fonctionnement correct du système de détection, ce qui permet d'utiliser des composants bon marché et donc de ne pas pénaliser le coût de fabrication de la cible 20.

Le fonctionnement du système de détection est le suivant :

Le premier circuit oscillant 11 commute alternativement entre les deux fréquences d'oscillation $F_{OSC1}$ et $F_{OSC2}$ en fonction de la position du commutateur 15. Pour cela, il suffit que les moyens de traitement 40 envoient un ordre de commutation binaire 19 cyclique pour alterner l'ouverture et la fermeture du commutateur 15, ainsi que l'indique la première courbe de la figure 4. L'intervalle de temps entre deux changements d'états consécutifs de l'ordre 19 est par exemple de l'ordre de 10 ms, pour ne pas pénaliser le temps de réponse du détecteur 10. Dans l'exemple de la figure 4, on a supposé qu'un ordre de commutation 19 égal à l'état "0" entraîne une fréquence d'oscillation du premier circuit oscillant 11 égale à $F_{OSC2}$, et qu'un ordre de commutation 19 égal à l'état "1" entraîne une fréquence d'oscillation égale à $F_{OSC1}$. Les courbes 51,52,53 de la figure 4 donnent une représentation du signal de détection 18 dans les trois situations suivantes :

1) Lorsque aucun objet n'est situé dans la zone de détection du détecteur 10, le niveau d'oscillation $V_{OSC}$ et la fréquence d'oscillation $F_{OSC}$ du signal de détection 18 ne sont pas affectés, comme représenté dans la courbe 51. L'unité de traitement est donc capable de détecter que, pour toutes les fréquences $F_{OSC}$, le niveau d'oscillation $V_{OSC}$ reste au-dessus d'un seuil de détection prédéterminé, indiqué $V_{DET}$. Préférentiellement, ce seuil de détection $V_{DET}$ est mémorisé dans les moyens de traitement 40.

2) Lorsqu'un objet métallique usuel est situé dans la zone de détection du détecteur 10, il apporte de façon connue des pertes par courant de Foucault, ce qui entraîne une baisse du niveau d'oscillation $V_{OSC}$ du premier circuit oscillant 11, quelle que soit la fréquence d'oscillation $F_{OSC}$ appliquée, et donc quel que soit l'état du commutateur 15, comme représenté dans la courbe 52. L'unité de traitement est donc capable de détecter que, pour toutes les fréquences $F_{OSC}$, le niveau d'oscillation $V_{OSC}$ est ainsi amorti au-dessous du seuil de détection $V_{DET}$.

3) Lorsqu'une cible 20 est située dans la zone de détection du détecteur 10, seul est amorti le niveau d'oscillation correspondant à une fréquence d'oscillation $F_{OSC}$ égale à la fréquence de résonance $F_C$ de la cible 20, en l'occurrence $F_{OSC2}$ comme représenté dans la courbe 53. Le niveau d'oscillation $V_{OSC}$ est alors supérieur au seuil $V_{DET}$ quand la fréquence d'oscillation est $F_{OSC1}$, et est inférieur au seuil $V_{DET}$ quand la fréquence d'oscillation est $F_{OSC2}$.

L'unité de traitement vérifie alors que le résultat de la comparaison entre le niveau d'oscillation $V_{OSC}$ du signal de détection 18 et le seuil $V_{DET}$ est en synchronisme avec l'état du commutateur 15 et donc avec l'état de l'ordre de commutation 19 envoyé par les moyens de traitement 40 (en négligeant notamment d'éventuels retards dans les temps de commutation).

Pour que l'unité de traitement détecte la présence d'une cible 20, il faut non seulement que le résultat de la comparaison entre le niveau d'oscillation $V_{OSC}$ et le seuil $V_{DET}$ change périodiquement, mais aussi que ces changements soient synchronisés avec l'ordre de commutation 19. De plus, toute modification dans la périodicité de l'ordre de commutation 19 doit créer une modification équivalente dans la périodicité du signal de détection 18. Quand l'unité de traitement détecte ce synchronisme, les moyens de traitement 40 fournissent alors un signal de sortie 41 signalant la présence d'une cible 20.

Le signal de sortie 41 permet donc d'indiquer qu'une cible 20 a été détectée (situation n°3 ci-dessus), puisqu'il est capable de ne pas confondre une cible métallique quelconque avec la cible particulière 20 telle que décrite précédemment. Cela permet de répondre très simplement à la fonction de sécurisation souhaitée. Le système de détection pourrait également délivrer une information supplémentaire indiquant qu'une cible métallique différente d'une cible 20 a été détectée (situation n°2), ce qui pourrait constituer une cause d'alarme.

Dans un mode de réalisation simplifié, l'intervalle de temps entre deux changements consécutifs de l'ordre de commutation 19 est fixe, comme indiqué en figure 4. Dans un mode de réalisation apportant une sécurité renforcée, on peut envisager des intervalles de temps variables entre deux changements consécutifs de l'ordre 19. Pour cela, on peut utiliser par exemple des alternances dont la durée n'est pas fixe mais est calculée à partir d'une séquence binaire pseudo-aléatoire mémorisée à l'intérieur du détecteur. L'unité de traitement devra alors vérifier le synchronisme entre les variations du niveau d'oscillation Vosc et les variations de l'ordre de commutation 19 pour élaborer la sortie 41 du détecteur, ce qui améliore la sécurité du système.

Les valeurs des fréquences $F_C$, $F_{OSC1}$ et $F_{OSC2}$ sont communes pour les différents détecteurs et cibles. Mais on pourrait aussi envisager des valeurs $F_C$, $F_{OSC1}$ et $F_{OSC2}$ qui soient personnalisées et propres à un système de détection donné, ou à un ensemble de systèmes de détection donnés, lesquels seraient destinés par exemple à une application particulière. Dans un tel cas, un détecteur ne pourrait être associé qu'à une cible appartenant au même système de détection ou au même ensemble de systèmes, amplifiant encore la sécurisation du système. D'autres combinaisons sont évidemment possibles.

Lorsque le système de détection est utilisé dans un automatisme exigeant une haute sécurité, les moyens de traitement du détecteur peuvent comporter deux unités de traitement qui élaborent chacune une réponse distincte pour fournir deux signaux de sortie indépendants, de manière à pouvoir surveiller une détérioration éventuelle de l'une de ces sorties (coupée ou en court-circuit).

Il est bien entendu que l'on peut, sans sortir du cadre de l'invention, imaginer d'autres variantes et perfectionnements de détail et de même envisager l'emploi de moyens équivalents.

## Revendications

1. Système de détection de présence comportant un détecteur de proximité inductif (10) et une cible (20) susceptible d'être détectée par le détecteur, le détecteur (10) comprenant un premier circuit oscillant (11) qui génère un signal de détection (18) selon plusieurs fréquences d'oscillation distinctes ($F_{OSC1}$, $F_{OSC2}$) et des moyens de traitement (40) dudit signal de détection (18), **caractérisé en ce que** la cible (20) comporte un second circuit oscillant (21) résonnant à une fréquence fixe ($F_C$) sensiblement égale à l'une des fréquences d'oscillation du premier circuit oscillant (11).

2. Système de détection de présence selon la revendication 1, **caractérisé en ce que** le premier circuit oscillant (11) commute entre deux fréquences d'oscillation ($F_{OSC1}$, $F_{OSC2}$) en fonction d'un ordre de commutation binaire cyclique (19) donné par les moyens de traitement (40).

3. Système de détection de présence selon la revendication 2, **caractérisé en ce que** le système de détection fournit un signal de sortie (41) indiquant une présence d'une cible (20) lorsque les variations du signal de détection (18) sont synchronisées avec les variations de l'ordre de commutation (19).

4. Système de détection de présence selon la revendication 2, **caractérisé en ce que** l'intervalle de temps entre deux changements d'états consécutifs de l'ordre de commutation (19) est variable.

5. Système de détection de présence selon la revendication 1, **caractérisé en ce que** le premier circuit oscillant (11) comporte un bobinage (12) connecté en parallèle avec un circuit capacitif variable.

6.    Système de détection de présence selon la revendication 5, **caractérisé en ce que** le circuit capacitif variable comprend une première capacité (13) et une seconde capacité (14) connectées en série et un commutateur électronique (15) piloté par l'ordre de commutation (19) et raccordé en parallèle avec la seconde capacité (14).

7.    Système de détection de présence selon la revendication 5, **caractérisé en ce que** le circuit capacitif variable comprend une première capacité (13) et une seconde capacité (14) connectées en parallèle et un commutateur électronique (15) piloté par l'ordre de commutation (19) et raccordé en série avec la seconde capacité (14).

8.    Système de détection de présence selon la revendication 1, **caractérisé en ce que** le second circuit oscillant (21) comporte un bobinage (22) connecté en parallèle avec une capacité (23).

**FIG. 1**

**FIG. 2**

**FIG. 3**

## FIG. 4

Office européen
des brevets

**RAPPORT DE RECHERCHE EUROPEENNE**

Numéro de la demande

EP 05 10 3446

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 792 965 A (MORGAN ET AL) 20 décembre 1988 (1988-12-20) * le document en entier * ----- | 1-8 | H04B5/00 |
| A | PATENT ABSTRACTS OF JAPAN vol. 1995, no. 09, 31 octobre 1995 (1995-10-31) & JP 07 153589 A (SANYO ELECTRIC CO LTD; others: 01), 16 juin 1995 (1995-06-16) * abrégé * ----- | 5,7 | |
| A | US 5 962 988 A (NUCKOLLS ET AL) 5 octobre 1999 (1999-10-05) * figure 25 * ----- | 5,7 | |

**DOMAINES TECHNIQUES RECHERCHES (Int.Cl.7)**

H04B

Le présent rapport a été établi pour toutes les revendications

| Lieu de la recherche | Date d'achèvement de la recherche | Examinateur |
|---|---|---|
| Munich | 8 septembre 2005 | LOPEZ DE ECHAZARRETA |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P04C02)

8

**ANNEXE AU RAPPORT DE RECHERCHE EUROPEENNE
RELATIF A LA DEMANDE DE BREVET EUROPEEN NO.**

EP 05 10 3446

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-09-2005

| Document brevet cité au rapport de recherche | | Date de publication | Membre(s) de la famille de brevet(s) | | Date de publication |
|---|---|---|---|---|---|
| US 4792965 | A | 20-12-1988 | AUCUN | | |
| JP 07153589 | A | 16-06-1995 | AUCUN | | |
| US 5962988 | A | 05-10-1999 | US | 5825139 A | 20-10-1998 |
| | | | WO | 9944396 A1 | 02-09-1999 |
| | | | AU | 736426 B2 | 26-07-2001 |
| | | | AU | 8932298 A | 03-06-1999 |
| | | | CA | 2252371 A1 | 12-05-1999 |
| | | | EP | 0917411 A2 | 19-05-1999 |
| | | | JP | 2000208285 A | 28-07-2000 |
| | | | TW | 427100 B | 21-03-2001 |
| | | | US | 6724155 B1 | 20-04-2004 |
| | | | AU | 6665198 A | 15-09-1999 |
| | | | EP | 1057370 A1 | 06-12-2000 |